# EUROPÄISCHE PATENTSCHRIFT

(11) **EP 2 796 307 B1**
(45) Veröffentlichungstag und Bekanntmachung des Hinweises auf die Patenterteilung: **11.03.2015**
(21) Anmeldenummer: 14001063.8
(22) Anmeldetag: 21.03.2014
(51) Int. Cl.: B60G 3/20, B60G 11/20, B60G 17/02, B62D 21/02, B60G 21/055, B60G 7/00

(54) **Radaufhängung für ein Kraftfahrzeug**
Wheel suspension for a motor vehicle
Suspension de roue pour un véhicule automobile

(30) Priorität: 27.04.2013 DE 102013007355
(43) Veröffentlichungstag der Anmeldung: 29.10.2014
(73) Patentinhaber: Audi AG, 85045 Ingolstadt (DE)
(72) Erfinder: Schindler, Andreas, DE - 85055 Ingolstadt (DE); Mohrlock, Dominik, 85114 Buxheim (DE); Schmitt, Joachim, DE - 85051 Ingolstadt (DE)

(56) Entgegenhaltungen:
- EP-A1- 0 603 536
- EP-A2- 1 147 970
- EP-A2- 1 184 214
- WO-A1-2005/035334
- DE-A1- 4 015 777
- DE-A1- 4 329 532
- DE-A1-102007 024 770
- DE-A1-102009 005 899
- DE-A1-102009 052 877
- DE-C1- 19 707 568
- JP-A- 2002 192 930
- JP-A- 2007 153 271
- JP-A- 2008 302 731
- JP-A- 2009 029 257

## Beschreibung

Die Erfindung betrifft eine Radaufhängung für ein Kraftfahrzeug, insbesondere für eine Fahrzeughinterachse mit nicht gelenkten Fahrzeugrädern, nach dem Oberbegriff des Patentanspruches 1.

Bei einer aktiven Fahrwerksregelung kann jede Radaufhängung einer Fahrzeugachse, insbesondere einer Hinterachse, jeweils einen Drehaktuator aufweisen. Mit den beiden Drehaktuatoren der Fahrzeugachse können je nach Ansteuerung das Fahrzeugniveau und/oder Nick- und Wankbewegungen des Kraftfahrzeuges des Fahrzeuges ausgeglichen werden.

Aus der DE 10 2009 052 877 A1 ist eine gattungsgemäße Radaufhängung für ein Kraftfahrzeug bekannt, bei der der Fahrzeugaufbau, insbesondere ein fahrzeugaufbauseitiger Hilfsrahmen, über Lenker drehgelenkig mit einem Radträger verbunden ist. Zudem ist ein Drehaktuator für eine aktive Fahrwerksregelung vorgesehen, der eine Motor-Getriebe-Einheit aufweist, mit der Drehmomente über zumindest einem Drehstab als Stellkräfte auf den Mehrlenkerverband übertragen werden können.

Der Drehaktuator ist in der DE 10 2009 052 877 A1 mit seinem Drehstab in der Fahrzeugquerrichtung angeordnet. Bei einer Quer-Anordnung des Drehstabs vor der Hinterachse muss aus Bauraumgründen das Tankvolumen des Kraftfahrzeuges verringert werden. Bei einer Quer-Anordnung hinter der Hinterachse ergibt sich dagegen ein Bauraumkonflikt mit der Reserveradmulde. Zudem ist eine Quer-Anordnung oberhalb der Hinterachse denkbar, bei der jedoch eine Höhenmaßkette im Fahrzeugrohbau deutlich größer wird, wodurch der Ladeboden beziehungsweise der Innenraum entsprechend eingeschränkt wird. Unterhalb der Hinterachse verläuft dagegen die Abgasanlage und/oder Kardanwellen inklusive Getriebe, die einer Queranordnung der Drehaktuatoren entgegenstehen. Generell führt die bauraumintensive Motor-Getriebe-Einheit des Drehaktuators zu Packageproblemen bei der Radaufhängung.

Aus der EP 1 184 214 A2 ist eine weitere Radaufhängung bekannt, bei der die Motor-Getriebe-Einheit des Drehaktuators koaxial zum Drehstab angeordnet ist, der sich in der Fahrzeuglängsrichtung erstreckt.

Die Aufgabe der Erfindung besteht darin, eine Radaufhängung für ein Kraftfahrzeug bereitzustellen, bei der trotz Einsatz einer aktiven Fahrwerksregelung Packageprobleme in der Fahrzeugachse reduziert sind.

Die Aufgabe ist durch die Merkmale des Patentanspruches 1 gelöst. Vorteilhafte Weiterbildungen der Erfindung sind in den Unteransprüchen offenbart.

Die Erfindung beruht auf dem Sachverhalt, dass zur Erhöhung der Verbindungs- oder Biegesteifigkeit des Fahrzeug-Hinterwagens Versteifungsstreben vorgesehen sind, die sich in der Fahrzeughochrichtung bodenseitig unterhalb des Mehrlenkerverbandes erstrecken. Damit der Fahrzeug-Bodenfreigang nicht beeinträchtigt wird, sind die Versteifungsstreben bauraumgünstig in bodenseitig offenen Strebengassen angeordnet. Das heißt, die Versteifungsstreben erstrecken sich in den Strebengassen, ohne dass dabei der Fahrzeug-Bodenfreigang beeinträchtigt ist. Bevorzugt können mit Bezug auf die Fahrzeuglängsmittelebene diagonal verlaufende sowie spiegelsymmetrisch angeordnete Versteifungsstreben vorgesehen sein. Diese können sich beispielhaft jeweils vom seitlichen Türschweller nach hinten, innen bis zur Reserveradmulde erstrecken.

Erfindungsgemäß werden diese bereits bereitgestellten Strebengassen bei der Anordnung des Drehaktuators genutzt. Gemäß dem kennzeichnenden Teil des Patentanspruches 1 ist nämlich der Drehaktuator zumindest teilweise in einem oberhalb der Versteifungsstrebe vorgesehenen Freiraum angeordnet. Der Drehstab und/oder die Motor-Getriebe-Einheit des Drehaktuators können dabei bevorzugt in axialer Ausrichtung, das heißt in Flucht mit der Versteifungsstrebe angeordnet sein. Die bereits vorgesehene, nach unten offene Strebengasse kann bis zu einer querschnittvergrößerten Drehstabgasse ausgeweitet werden, die einen ausreichend großen Bauraum zur Anordnung des Drehstabes bereitstellt. Das heißt, dass der Kraftstofftank und/oder die Reserveradmulde bodenseitig sowohl eine nach unten offene Drehstabgasse als Freiraum aufweist, als auch eine, die Drehstabgasse gegebenenfalls verlängernde Strebengasse, in der sich die Versteifungsstrebe erstreckt.

Bevorzugt kann sich der Drehstab im Wesentlichen über die gesamte Länge der Versteifungsstrebe erstrecken. Dadurch wird die wirksame Federlänge des Drehaktuators deutlich erhöht, wodurch mit einfachen Mitteln ein entsprechend weicher Drehstab bereitgestellt wird.

Bevorzugt kann die bauraumintensive Motor-Getriebe-Einheit des Drehaktuators in einen weiteren Freiraum einragen, der durch die Lenker des Mehrlenkerverbandes in der Fahrzeuglängsrichtung nach vorne und/oder nach hinten begrenzt ist.

Bevorzugt ist der Freiraum für die Motor-Getriebe-Einheit des Drehaktuators in der Fahrzeuglängsrichtung zwischen einem ersten Lenker und einem zweiten Lenker nach vorne und nach hinten begrenzt. Die ersten und zweiten Lenker können jeweils untere Lenker eines Fünflenkerverbandes sein. In einem solchen Mehrlenkerverband können die Lenker jeweils in einer oberen Lenkerebene und in einer unteren Lenkerebene angeordnet sein. Entsprechend kann der Freiraum für die Motor-Getriebe-Einheit besonders bevorzugt zwischen zwei Lenker in der unteren Lenkerebene angeordnet sein.

Der mittels der Motor-Getriebe-Einheit betätigbare Drehstab kann einen Abtriebshebel tragen, der über eine Koppelstange an einem der Lenker gelenkig angebunden ist. Auf diese Weise können die in der Motor-Getriebe-Einheit erzeugten Drehmomente über den Lastpfad Motor/Getriebe/Drehstab/Antriebshebel/Koppelstange/Lenker/Fahrzeugrad letztlich als lineare Stellkräfte auf das Fahrzeugrad übertragen werden. Im Falle des oben erwähnten Fünflenkerverbandes kann der Abtriebshebel und die Koppelstange an einem Lenker der oberen Lenkerebene angreifen und unterhalb dieses oberen Lenkers angeordnet sein.

Der Freiraum für die Motor-Getriebe-Einheit kann nach oben durch zumindest einen oberen Lenker begrenzt sein, der zum Beispiel über den Drehaktuator mit Stellkräften beaufschlagt wird. In der Fahrzeuglängsrichtung betrachtet kann dieser obere Lenker zwischen dem ersten unteren Lenker und dem zweiten unteren Lenker angeordnet sein:

Aus Bauraumgründen ist es bevorzugt, wenn die Motor-Getriebe-Einheit des Drehaktuators, zumindest dessen Übersetzungsgetriebe, koaxial zum Drehstab angeordnet ist. Der Drehstab kann zudem zusammen mit der Motor-Getriebe-Einheit in der Fahrzeuglängsrichtung fluchtend ausgerichtet sein. In diesem Fall kann der rechtwinklig vom Drehstab abragende Abtriebshebel in den Freiraum für die Motor-Getriebe-Einheit einragen.

In einer weiteren Ausführungsform kann der Motor des Drehaktuators nicht koaxial, sondern vielmehr mit einem radialen Achsabstand zum Drehstab angeordnet sein. Der Motor kann zudem über ein Zwischengetriebe auf das Drehstab koaxiale Übersetzungsgetriebe abtreiben. Auf diese Weise kann der Motor, insbesondere ein Elektromotor, unabhängig vom Übersetzungsgetriebe je nach Bauraumerfordernisse positioniert werden. Speziell ein solcher, vom Übersetzungsgetriebe räumlich getrennter Motor kann bevorzugt in dem oben erwähnten Freiraum des Mehrlenkerverbandes angeordnet sein.

In einer besonders kompakten Ausführung des Mehrlenkerverbandes kann die Koppelstange vertikal nach oben verlaufen und mit einer Gelenkverbindung mit dem oberen Lenker des Mehrlenkerverbandes verbunden sein. Die Gelenkverbindung zwischen der Koppelstange und dem oberen Lenker kann, insbesondere im eingefederten Zustand des Fahrzeugs, in der Fahrzeugquerrichtung um einen Quer-Freigang außerhalb eines Fahrzeug-Längsträgers angeordnet sein. Der obere Lenker kann sich in der Vertikalrichtung unterhalb des Fahrzeug-Längsträgers erstrecken. Zur Bereitstellung eines Vertikal-Freigangs für den Fahrzeug-Längsträger kann der obere Lenker nach unten gekrümmt sein, und zwar mit an einer unteren Scheitelstelle zusammenlaufenden Bogenabschnitten. Die Scheitelstelle kann im eingefederten Zustand des Fahrzeugs um einen Vertikal-Freigang vom Fahrzeug-Längsträger beabstandet sein.

Mit der Zwischengetriebestufe kann darüber hinaus ein größeres Gesamtübersetzungsverhältnis zwischen dem Elektromotor und dem Drehstab bewirkt werden. Die Elektromotoren können hier daher kleiner und gewichtsgünstiger ausgelegt werden. Dadurch kann der Elektromotor äußerst kompakt und damit bauraumsparend ausgeführt sein. Bevorzugt kann das zum Drehstab koaxiale Übersetzungsgetriebe und der davon beabstandete Motor der Motor-Getriebe-Einheit jeweils in Einzelgehäusen angeordnet sein. Das Zwischengetriebe kann beispielhaft ein Umschlingungstrieb oder ein Stirnradtrieb sein, um den erforderlichen, radialen Versatz zwischen dem Motor und dem Drehstab herzustellen.

Die vorstehend erläuterten und/oder in den Unteransprüchen wiedergegebenen vorteilhaften Aus- und/oder Weitebildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Teilansicht von unten den Mehrlenkerverband der Radaufhängung;
- Fig. 2: in einer Teilansicht von oben den Mehrlenkerverband der Radaufhängung;
- Fig. 3: eine Schnittdarstellung entlang der Schnittebene I-I aus der Fig. 1;
- Fig. 4: in einer Teilansicht von vorne den Mehrlenkerverband der Radaufhängung; und
- Fig. 5: eine Schnittdarstellung entlang der Schnittebene II-II aus der Fig. 3.

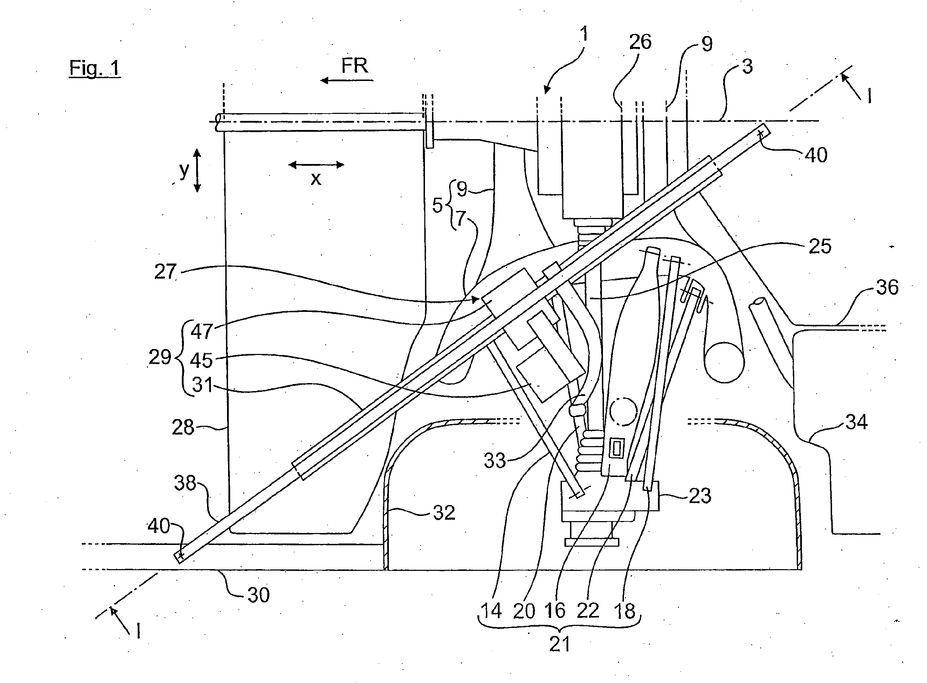

In der Fig. 1 ist in einer Teilansicht von unten eine Hinterachse 1 für ein zweispuriges Kraftfahrzeug dargestellt, die nur insoweit beschrieben ist, als es für das Verständnis der Erfindung erforderlich ist. Die Hinterachse 1 ist mit Bezug auf eine Fahrzeugmittellängsebene 3 (Fig. 1) spiegelsymmetrisch ausgeführt. Die Hinterachse 1 weist einen Hilfsrahmen 5 auf, der aus Längsträgern 7 sowie aus vorderen und hinteren Querträgern 9 aufgebaut ist. Der Hilfsrahmen 5 ist in an sich bekannter Weise an einem Fahrzeugrohbau angebunden. Am Längsträger 7 des Hilfsrahmens 5 sind für die Radaufhängung untere Lenker 14, 16, 18 sowie obere Lenker 20, 22 in räumlich versetzter Anordnung über nicht näher gezeigte Lenkerlager angelenkt. Die Lenker 14 bis 22 erstrecken sich in der Fahrzeugquerrichtung y nach außen bis zum Radträger 23, der ein nicht dargestelltes Hinterrad des Kraftfahrzeuges trägt. Im vorliegenden Ausführungsbeispiel wird das Hinterrad durch eine Gelenkwelle 25 angetrieben, die in ein, am Hilfsrahmen 5 aufgehängtes Hinterachs-Differenzial 26 geführt ist. Am Hinterachsdifferenzial 26 ist eine Kardanwelle angeschlossen.

Wie aus der Fig. 1 weiter hervorgeht, ist in der Fahrzeuglängsrichtung x betrachtet vor der Hinterachse 1 ein Fahrzeugtank 28 vorgesehen, an dem in der Fahrzeugquerrichtung y nach außen ein seitlicher Türschweller 30 grenzt. Der Türschweller 30 erstreckt sich in der Fahrzeuglängsrichtung x nach hinten bis zu einem Radhaus 32, in dem das nicht dargestellte Hinterrad angeordnet ist. Im weiteren Verlauf nach hinten folgt ein End-Schalldämpfer 34 einer Abgasanlage. In etwa auf gleicher Höhe ist gemäß der Fig. 1 fahrzeugmittig eine Reserveradmulde 36 vorgesehen, die unmittelbar hinter der Hinterachse 1 angeordnet ist.

Zur Erhöhung der Steifigkeit des Fahrzeug-Hinterwagens ist in der Fig. 1 eine Versteifungsstrebe 38 vorgesehen, die an Befestigungsstellen 40 jeweils am seitlichen Türschweller 30 und bodenseitig an der Reserveradmulde 36 angebunden ist. Die Versteifungsstrebe 38 verläuft ausgehend von dem seitlichen Türschweller 30 diagonal nach hinten in der Fahrzeugquerrichtung y nach innen.

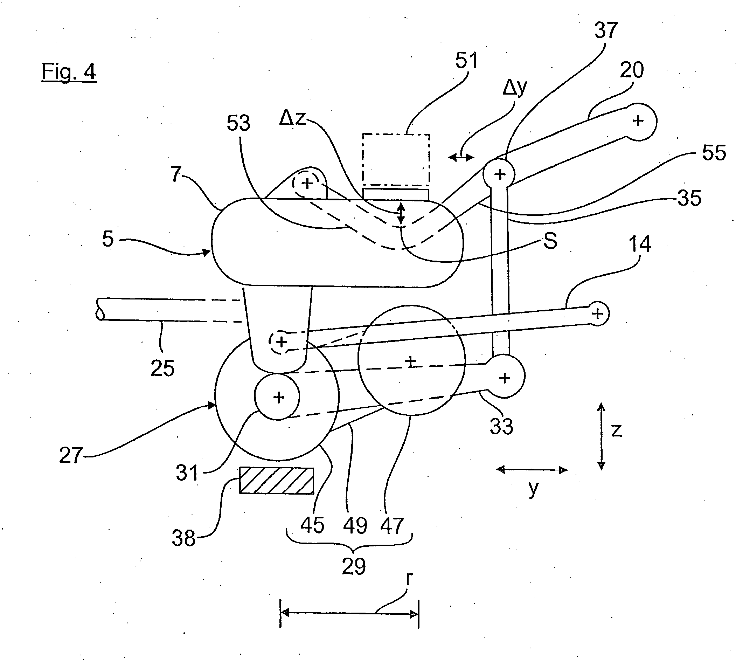

Wie aus der Fig. 1 weiter hervorgeht, ist am Hilfsrahmen-Längsträger 7 ein Drehaktuator 27 für eine aktive Fahrwerksregelung vorgesehen. Der Drehaktuator 27 weist eine Motor-Getriebe-Einheit 29 auf, mit der ein Drehstab 31 trieblich verbunden ist. Der Drehstab 31 ist kraftübertragend mit einem Abtriebshebel 33 in Verbindung, der über eine Koppelstange 35 (Fig. 4) in einer Gelenkverbindung 37 mit einem oberen Hebel 20 des Mehrlenkerverbandes 21 ist.

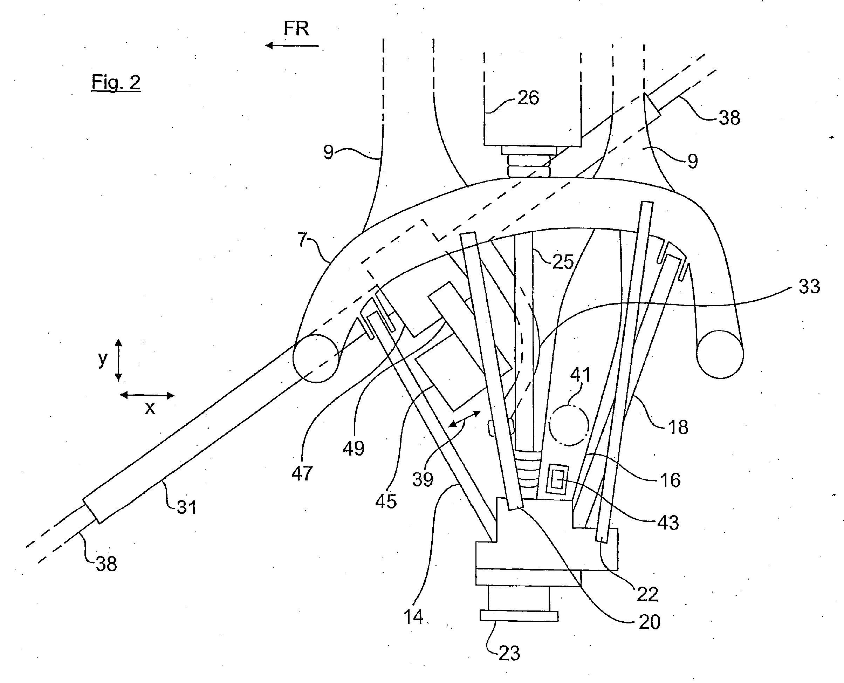

Der in der Fahrtrichtung FR vordere untere erste Lenker 14 und der dahinter angeordnete untere zweite Lenker 16 laufen in der Fahrzeugquerrichtung y nach innen keilförmig auseinander, und zwar unter Bildung eines Freiraums 39 (Fig. 2), in dem teilweise die Motor-Getriebe-Einheit 29 des Drehaktuators 27 einragt. Am zweiten unteren Lenker 16 sind gemäß den Fig. 1 und 2 jeweils eine angedeutete Tragfeder 41 sowie ein angedeuteter Teleskopstoßdämpfer 43 abgestützt.

Die Motor-Getriebe-Einheit 29 weist gemäß den Figuren ein koaxial zum Drehstab 31 vorgesehenes Übersetzungsgetriebe 45 sowie einen mit einem radialen Achsversatz r (Fig. 4) zum Drehstab 31 beabstandeten Elektromotor 47 auf, der über eine Zwischengetriebestufe 49 (Fig. 2) in Antriebsverbindung mit dem Übersetzungsgetriebe 45 ist. Das Gehäuse des Übersetzungsgetriebes 45 des Drehaktuators 27 ist in nicht näher gezeigter Weise bauteilsteif am Hilfsrahmen-Längsträger 7 befestigt, und zwar so, dass der Drehstab 31 des Drehaktuators 27 fluchtend mit dem Verlauf der Versteifungsstrecke 38 ausgerichtet ist. Der gesamte Drehaktuator 27 ist dabei unterhalb des Hilfsrahmen-Längsträgers 7 sowie unterhalb der Gelenkwelle 25 positioniert. Ausgehend vom Übersetzungsgetriebe 45 ragt dabei die Zwischengetriebestufe 49 zusammen mit dem Elektromotor 47 vollständig in den Freiraum 39 zwischen den beiden unteren Lenkern 14, 16 hinein.

Der Freiraum 39 zwischen den beiden unteren Lenkern 14, 16 ist in der Vertikalrichtung z nach oben durch den oberen Lenker 20 des Mehrlenkerverbandes 21 begrenzt. Die beiden oberen Lenker 20, 22 des Mehrlenkerverbandes 21 sind jeweils in einer oberen Lenkerebene angeordnet, während die insgesamt drei unteren Lenker 14, 16, 18 in einer unteren Lenkerebene positioniert sind. Der Abtriebshebel 33 sowie die Koppelstange 35 sind dabei in etwa fluchtend unterhalb des oberen Lenkers 20 angeordnet, wobei die Koppelstange 35 im Wesentlichen vertikal nach oben ausgerichtet ist.

In der Fig. 4 ist die Radaufhängung in einem eingefederten Zustand des Kraftfahrzeuges gezeigt. Demzufolge ist die Gelenkverbindung 37 zwischen der Koppelstange 35 und dem vorderen oberen Lenker 20 in der Fahrzeugquerrichtung y um einen Quer-Freigang Δy außerhalb eines Fahrzeug-Längsträgers 51 angeordnet. Der sich unterhalb des Fahrzeug-Längsträgers 51 erstreckende Lenker 20 ist in etwa V-förmig nach unten gekrümmt, um einen ausreichend großen Vertikal-Freigang Δz bereitzustellen. Die V-förmige Krümmung weist gemäß der Fig. 4 zwei an einer unteren Scheitelstelle S zusammenlaufende Bogenabschnitte 53, 55 auf. Die untere Scheitelstelle S des Lenkers 20 ist dabei um den vorerwähnten Vertikal-Freigang Δz von der Unterseite des Fahrzeug-Längsträgers 51 beabstandet.

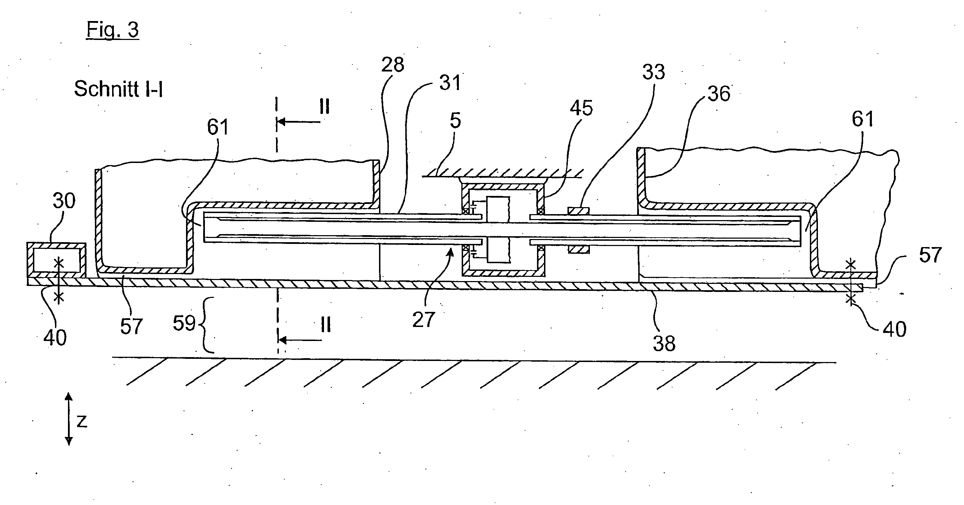

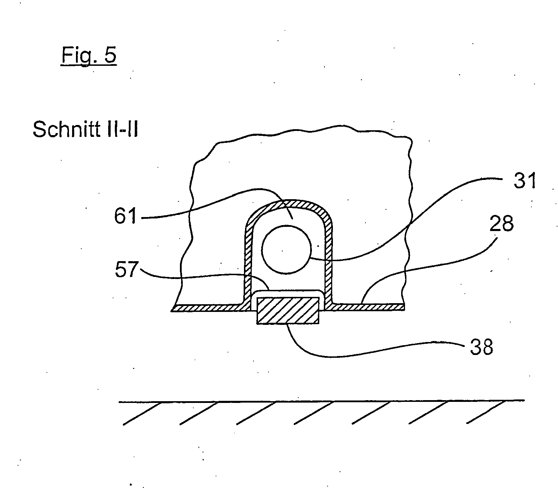

Wie aus den Figuren hervorgeht ist der Drehaktuator 27 mit seinem Drehstab 31 in Flucht mit der Versteifungsstrebe 38 angeordnet. Der Drehstab 31 erstreckt sich dabei zusammen mit der Motorgetriebeeinheit 29 in der Fahrzeughochrichtung z oberhalb der Versteifungsstrebe 38. Diese verläuft gemäß den Fig. 3 und 5 in einer Strebengasse 57, die bodenseitig nach unten offen sowohl im Kraftstofftank 28 als auch in der Reserveradmulde 36 ausgebildet ist. Die Strebengasse 57 bildet einen Freiraum, in dem die Versteifungsstrebe 38 weitgehend angeordnet ist, wodurch ein Bodenfreigang 59 des Fahrzeuges nicht beeinträchtigt wird. Die Strebengasse 57 ist gemäß den Fig. 3 und 5 im Bereich des Drehstabes 31 zu einer ebenfalls nach unten offenen Drehstabgasse 61 ausgeweitet. Der Querschnitt der Drehstabgasse 61 ist dabei so ausgelegt, dass der Drehstab 31 vollständig darin angeordnet ist.

## Patentansprüche

1. Radaufhängung für ein zweispuriges Kraftfahrzeug, mit einem Mehrlenkerverband (21) aus Lenkern (14, 16, 18, 20, 22), die am Fahrzeugaufbau, insbesondere an einem Hilfsrahmen (5) des Fahrzeugaufbaus, und an einem Radträger (23) angelenkt sind, und mit einem Drehaktuator (27) für eine aktive Fahrwerksregelung, der eine Motor-Getriebe-Einheit (29) aufweist, mit der Drehmomente über einen Drehstab (31) als Stellkräfte auf den Mehrlenkerverband (21) übertragbar sind, **dadurch gekennzeichnet, dass** zumindest eine vom Mehrlenkerverband (21) unabhängige, aufbauseitige Versteifungsstrebe (38) vorgesehen ist, die sich, in der Fahrzeughochrichtung (z) betrachtet, unterhalb des Mehrlenkerverbands (21) erstreckt, und dass die Versteifungsstrebe (38) in der Fahrzeughochrichtung (z) nach unten einen Freiraum (61) begrenzt, in dem zumindest teilweise der Drehaktuator (27) angeordnet ist.

2. Radaufhängung nach Anspruch 1, **dadurch gekennzeichnet, dass** der Drehstab (31) und/oder die Motor-Getriebe-Einheit (29), zumindest das Getriebe (45) der Motor-Getriebe-Einheit (29), in Flucht mit der Versteifungsstrebe (38) ausgerichtet ist.

3. Radaufhängung nach Anspruch 1 oder 2, **dadurch gekennzeichnet, dass** die Versteifungsstrebe (38) in der Fahrzeuglängsrichtung (x) vor dem Mehrlenkerverband (21) am Fahrzeugaufbau, insbesondere am seitlichen Türschweller (30), und in der Fahrzeuglängsrichtung (x) hinter dem Mehrlenkerverband (21) am Fahrzeugaufbau, insbesondere an der Reserveradmulde (36), angebunden ist.

4. Radaufhängung nach Anspruch **3, dadurch gekennzeichnet, dass** in der Fahrzeuglängsrichtung (x) vor dem Mehrlenkerverband (21) ein Kraftstofftank (28) angeordnet ist, und dass insbesondere der Kraftstofftank und/oder die Reserveradmulde (36) eine bodenseitig nach unten offene Drehstab-Gasse als Freiraum (61) aufweist, in der der Drehstab (31) des Drehaktors (27) einragt.

5. Radaufhängung nach einem der vorhergehenden Ansprüche, **dadurch gekennzeichnet, dass** der Kraftstofftank (28) und/oder die Reserveradmulde (36) eine bodenseitig nach unten offene StrebenGasse (57) aufweist, die im Vergleich zur Drehstab-Gasse (61) querschnittsreduziert ist.

6. Radaufhängung nach einem der vorhergehenden Ansprüche, **dadurch gekennzeichnet, dass** die Motor-Getriebe-Einheit (29) des Drehaktuators (27) zumindest teilweise in einem weiteren Freiraum (39) angeordnet ist, der in der Fahrzeuglängsrichtung (x) zwischen einem ersten Lenker (14) und einem zweiten Lenker (16), insbesondere untere Lenker des Mehrlenkerverbands (21), bereitgestellt ist.

7. Radaufhängung nach einem der vorhergehenden Ansprüche, **dadurch gekennzeichnet, dass** der Drehstab (31) des Drehaktuators (27) einen Abtriebshebel (33) trägt, der insbesondere über eine Koppelstange (35) an einem Lenker (20) des Mehrlenkerverbands (21), insbesondere einem oberen Lenker, angebunden ist, und/oder dass der Abtriebshebel (33) und die Koppelstange (35) unterhalb des oberen Lenkers (20) angeordnet sind.

8. Radaufhängung nach Anspruch 7, **dadurch gekennzeichnet, dass** der Freiraum (39) für die Motor-Getriebe-Einheit (29) nach oben durch den oberen Lenker (20) begrenzt ist, und/oder dass der obere Lenker (20) in der Fahrzeuglängsrichtung (x) zwischen dem ersten unteren Lenker (14) und dem zweiten unteren Lenker (16) angeordnet ist.

9. Radaufhängung nach einem der vorhergehenden Ansprüche, **dadurch gekennzeichnet, dass** die Motor-Getriebe-Einheit (29) des Drehaktuators (27), insbesondere das Getriebe (45), koaxial zum Drehstab (31) ist, und/oder dass der Motor (47) nicht koaxial, sondern mit einem radialen Achs-Abstand (r) zum Drehstab (31) angeordnet ist, und/oder dass der Motor (47) insbesondere mit einer Zwischengetriebestufe (49) auf das Getriebe (45) abtreibt.

10. Radaufhängung nach einem der vorhergehenden Ansprüche, **dadurch gekennzeichnet, dass** der Hilfsrahmen (5) Längsträger (7) und Querträger (9) aufweist, und dass die Motor-Getriebe-Einheit (29) unterhalb eines der Längsträger (7) angeordnet ist.

11. Radaufhängung nach Anspruch 12, **dadurch gekennzeichnet, dass** zumindest der Motor (47) der Motor-Getriebe-Einheit (29) im Freiraum (39) angeordnet ist.

## Claims

1. Wheel suspension for a two-track motor vehicle, comprising a multi-link assembly (21) consisting of links (14, 16, 18, 20, 22) that are articulated to the vehicle body, in particular to a subframe (5) of the vehicle body, and to a hub carrier (23), and comprising a rotary actuator (27) for actively controlling the chassis which has an engine transmission unit (29) that can be used to transfer torques, in the form of actuating forces, to the multi-link assembly (21) by means of a torsion bar (31), **characterised in that** at least one vehicle-body-side reinforcing brace (38) which is independent of the multi-link assembly (21) is provided and extends beneath the multi-link assembly (21) when viewed in the vehicle vertical direction (z), and **in that**, in the vehicle vertical direction (z), the reinforcing brace (38) defines the bottom of a free space (61), in which the rotary actuator (27) is arranged at least in part.

2. Wheel suspension according to claim 1, **characterised in that** the torsion bar (31) and/or the engine transmission unit (29), at least the transmission (45) of the engine transmission unit (29), is aligned with the reinforcing brace (38).

3. Wheel suspension according to either claim 1 or claim 2, **characterised in that** the reinforcing brace (38) is attached to the vehicle body, in particular to the lateral door sill (30), in front of the multi-link assembly (21) in the vehicle longitudinal direction (x), and the reinforcing brace is attached to the vehicle body, in particular to the spare wheel well (36), behind the multi-link assembly (21) in the vehicle longitudinal direction (x).

4. Wheel suspension according to claim 3, **characterised in that** a fuel tank (28) is arranged in front of the multi-link assembly (21) in the vehicle longitudinal direction (x), and **in that** the fuel tank and/or the spare wheel well (36) in particular comprises an open-bottomed torsion bar channel as a free space (61) into which the torsion bar (31) of the rotary actuator (27) protrudes.

5. Wheel suspension according to any of the preceding claims, **characterised in that** the fuel tank (28) and/or the spare wheel well (36) comprises an open-bottomed brace channel (57) that has a smaller cross section than the torsion bar channel (61).

6. Wheel suspension according to any of the preceding claims, **characterised in that** the engine transmission unit (29) of the rotary actuator (27) is arranged at least in part in an additional free space (39) provided between a first link (14) and a second link (16), in particular a lower link of the multi-link assembly (21), in the vehicle longitudinal direction (x).

7. Wheel suspension according to any of the preceding claims, **characterised in that** the torsion bar (31) of the rotary actuator (27) bears a output lever (33) that is attached to a link (20), in particular to an upper link, of the multi-link assembly (21), in particular by means of a coupling rod (35), and/or **in that** the output lever (33) and the coupling rod (35) are arranged beneath the upper link (20).

8. Wheel suspension according to claim 7, **characterised in that** the free space (39) for the engine transmission unit (29) is limited at the top by the upper link (20), and/or **in that** the upper link (20) is arranged between the first lower link (14) and the second lower link (16) in the vehicle longitudinal direction (x).

9. Wheel suspension according to any of the preceding claims, **characterised in that** the engine transmission unit (29) of the rotary actuator (27), in particular the transmission (45), is coaxial with the torsion bar (31), and/or **in that** the engine (47) is arranged such that it is not coaxial with, but rather is at a radial centre distance (r) from the torsion bar (31), and/or **in that** the engine (47) in particular outputs to the transmission (45) by means of an intermediate transmission stage (49).

10. Wheel suspension according to any of the preceding claims, **characterised in that** the subframe (5) comprises longitudinal beams (7) and transverse beams (9), and **in that** the engine transmission unit (29) is arranged beneath one of the longitudinal beams (7).

11. Wheel suspension according to claim 12, **characterised in that** at least the engine (47) of the engine transmission unit (29) is arranged in the free space (39).

## Revendications

1. Suspension de roue pour un véhicule automobile à double voie, avec un groupe de multiples bielles (21) constitué de bielles (14, 16, 18, 20, 22), qui sont articulées sur la carrosserie de véhicule, notamment sur un faux-châssis (5) de la carrosserie de véhicule, et sur un support de roue (23), et avec un actionneur rotatif (27), qui est destiné à un contrôle actif de châssis et qui comporte une unité moteur-transmission (29) avec laquelle des couples peuvent être transmis comme couples de commande au groupe de multiples bielles (21) par l'intermédiaire d'une barre de torsion (31), **caractérisée en ce qu'**il est prévu au moins une barre de renfort (38) qui est du côté de la carrosserie et indépendante du groupe de multiples bielles (21) et qui s'étend, vu dans le sens (z) de la hauteur du véhicule, en dessous du groupe de multiples bielles (21) et **en ce que** la barre de renfort (38) délimite vers le bas, dans le sens (z) de la hauteur du véhicule, une zone de dégagement (61) dans laquelle l'actionneur rotatif (27) est agencé au moins en partie.

2. Suspension de roue selon la revendication 1, **caractérisée en ce que** la barre de torsion (31) et/ou l'unité moteur-transmission (29), au moins la transmission (45) de l'unité moteur-transmission (29), est alignée avec la barre de renfort (38).

3. Suspension de roue selon la revendication 1 ou 2, **caractérisée en ce que** la barre de renfort (38) est reliée à la carrosserie de véhicule, dans le sens (x) de la longueur du véhicule, devant le groupe de multiples bielles (21), notamment au bas de caisse latéral (30), et à la carrosserie de véhicule, dans le sens (x) de la longueur du véhicule, derrière le groupe de multiples bielles (21), notamment au logement de roue de secours (36).

4. Suspension de roue selon la revendication 3, **caractérisée en ce qu'**un réservoir de carburant (28) est agencé, dans le sens (x) de la longueur du véhicule, devant le groupe de multiples bielles (21) et **en ce que** notamment le réservoir de carburant et/ou le logement de roue de secours (36) comportent comme zone de dégagement (61) un passage de barre de torsion qui est ouvert vers le bas du côté du fond et dans lequel la barre de torsion (31) de l'actionneur rotatif (27) pénètre.

5. Suspension de roue selon l'une des revendications précédentes, **caractérisée en ce que** le réservoir de carburant (28) et/ou le logement de roue de secours (36) comportent un passage de barre (57) qui est ouvert vers le bas du côté du fond et dont la section transversale est réduite en comparaison du passage de barre de torsion (61).

6. Suspension de roue selon l'une des revendications précédentes, **caractérisée en ce que** l'unité moteur-transmission (29) de l'actionneur rotatif (27) est agencée au moins en partie dans une autre zone de dégagement (39) qui est prévue, dans le sens (x) de la longueur du véhicule, entre une première bielle (14) et une deuxième bielle (16), notamment des bielles inférieures du groupe de multiples bielles (21).

7. Suspension de roue selon l'une des revendications précédentes, **caractérisée en ce que** la barre de torsion (31) de l'actionneur rotatif (27) supporte un levier de sortie (33) qui est relié, notamment par l'intermédiaire d'une biellette de renvoi (35), à une bielle (20) du groupe de multiples bielles (21), notamment à une bielle supérieure, et/ou **en ce que** le levier de sortie (33) et la biellette de renvoi (35) sont agencés en dessous de la bielle supérieure (20) .

8. Suspension de roue selon la revendication 7, **caractérisée en ce que** la zone de dégagement (39) pour l'unité moteur-transmission (29) est délimitée en haut par la bielle supérieure (20) et/ou **en ce que** la bielle supérieure (20) est agencée, dans le sens (x) de la longueur du véhicule, entre la première bielle inférieure (14) et la deuxième bielle inférieure (16).

9. Suspension de roue selon l'une des revendications précédentes, **caractérisée en ce que** l'unité moteur-transmission (29) de l'actionneur rotatif (27), notamment la transmission (45), est coaxiale à la barre de torsion (31) et/ou **en ce que** le moteur (47) n'est pas coaxial mais agencé à une certaine distance d'axe radiale (r) par rapport à la barre de torsion (31) et/ou **en ce que** le moteur (47) entraîne en sortie la transmission (45) notamment avec une boîte de transmission intermédiaire (49).

10. Suspension de roue selon l'une des revendications précédentes, **caractérisée en ce que** le faux-châssis (5) comporte des poutres longitudinales (7) et des poutres transversales (9) et **en ce que** l'unité moteur-transmission (29) est agencée en dessous de l'une des poutres longitudinales (7).

11. Suspension de roue selon la revendication 12, **caractérisée en ce qu'**au moins le moteur (47) de l'unité moteur-transmission (29) est agencé dans la zone de dégagement (39).
